# EUROPEAN PATENT SPECIFICATION

(11) **EP 4 481 168 B1**
(45) Date of publication and mention of the grant of the patent: **02.09.2026**
(21) Application number: 24182583.5
(22) Date of filing: 17.06.2024
(51) Int. Cl.: F01M 1/10, F01M 5/00, F01M 11/03

(54) **OIL FILTER HOUSING SYSTEM, OIL FILTRATION SYSTEM, AND ENGINE SYSTEM**
ÖLFILTERGEHÄUSESYSTEM, ÖLFILTERSYSTEM UND MOTORSYSTEM
SYSTÈME DE BOÎTIER DE FILTRE À HUILE, SYSTÈME DE FILTRATION D'HUILE ET SYSTÈME DE MOTEUR

(30) Priority: 19.06.2023 IN 202341041431
(43) Date of publication of application: 25.12.2024
(73) Proprietor: Cummins Inc., Columbus, IN 47201 (US)
(72) Inventor: Deshpande, Hemant Prakash, 411021 Pune (IN); Rajale, Saurabh, 431005 Aurangabad (IN); Rohokale, Dilip Prabhakar, Pune (IN)
(74) Representative: Cleveland Scott York

(56) References cited:
- CN-A- 113 503 200
- CN-B- 107 387 195
- CN-U- 216 642 267
- RU-C1- 2 507 404
- US-A1- 2008 006 229

## Description

### CROSS-REFERENCE TO RELATED APPLICATIONS

The present application claims priority to Indian Provisional Patent Application No. 202341041431, entitled "Oil Filter Housing System, Oil Filtration System, and Engine System," filed June 19, 2023.

### TECHNICAL FIELD

The present application relates generally to an oil filtration system, and more particularly to an oil filter housing system.

### BACKGROUND

In an engine system, an oil filtration system is used to remove contaminants from the oil before the oil is provided to the engine or associated components such as a turbocharger. The oil can undergo a cooling process prior to being provided to other engine system components. CN113503200 A describes a known oil filtration and cooling system.

### SUMMARY

According to a first aspect of the present invention, there is provided an apparatus according to claim 1 of the appended claims.
According to various embodiments, an oil filter housing system comprises a housing body. The housing body defines an integral coolant supply passage including an integral coolant supply passage inlet. The housing body further defines an integral coolant volute including an integral coolant volute inlet. The housing body defines an oil cooler cavity configured to house an oil cooler. The housing body defines a first integral oil flow passage including a first integral oil flow passage outlet. The housing body defines a second integral oil flow passage including a second integral oil flow passage inlet. The housing body defines a third integral oil flow passage including a third integral oil flow passage outlet. The housing body defines an angled oil filter interface coupled to the housing body and configured to receive an oil filter, the oil filter fluidly connected with the third integral oil flow passage.

According to various other embodiments, an oil filtration system comprises an oil filter housing system and one or more attachments coupled to the oil filter housing system. The oil filter housing system comprises a housing body. The housing body defines an integral coolant supply passage including an integral coolant supply passage inlet. The housing body further defines an integral coolant volute including an integral coolant volute inlet. The housing body defines an oil cooler cavity configured to house an oil cooler. The housing body defines a first integral oil flow passage including a first integral oil flow passage outlet. The housing body defines a second integral oil flow passage including a second integral oil flow passage inlet. The housing body defines a third integral oil flow passage including a third integral oil flow passage outlet. The housing body defines an angled oil filter interface coupled to the housing body and configured to receive an oil filter, the oil filter fluidly connected with the third integral oil flow passage.

According to still other embodiments, an engine system comprises an oil filter housing system. The oil filter housing system comprises a housing body. The housing body defines an integral coolant supply passage including an integral coolant supply passage inlet. The housing body further defines an integral coolant volute including an integral coolant volute inlet. The housing body defines an oil cooler cavity. The housing body defines a first integral oil flow passage including a first integral oil flow passage outlet. The housing body defines a second integral oil flow passage including a second integral oil flow passage inlet. The housing body defines a third integral oil flow passage including a third integral oil flow passage outlet. The housing body defines an angled oil filter interface coupled to the housing body. A coolant pump is fluidly coupled to the housing body. An oil cooler is fluidly coupled to the housing body. A turbocharger is fluidly coupled to the housing body. An oil filter is fluidly coupled to the angled oil filter interface.

### BRIEF DESCRIPTION OF THE DRAWINGS

The details of one or more implementations are set forth in the accompanying drawing and the description below. Other features, aspects, and advantages of the disclosure will become apparent from the description, the drawings, and the claims.
Figure 1 is a perspective view of an example oil filter housing system.
Figure 2 is another perspective view of the oil filter housing system of Figure 1.
Figure 3 is another perspective view of the oil filter housing system of Figure 1.
Figure 4 is another perspective view of the oil filter housing system of Figure 1.
Figure 5 is a perspective view of the top of a portion of the oil filter housing system of Figure 1.
Figure 6 is yet another perspective view of the oil filter housing system of Figure 1.
Figure 7 is an example cross-section for the oil filter housing system of Figure 1, taken along line A-A of Figure 2.
Figure 8 is a cross-sectional view of a portion of the oil filter housing system of Figure 1, taken along line B-B of Figure 2.
Figure 9 is a perspective view of the oil filter housing system of Figure 1 with example attachments.
Figure 10 is a perspective view of the oil filter housing system of Figure 1 with other example attachments.
Figure 11 is a perspective view of a portion of the oil filter housing system of Figure 1.
Figure 12 is a front view of an example oil filter housing system according to another embodiment.
Figure 13 is a right side view of the oil filter housing system of Figure 12.
Figure 14 is a rear view of the oil filter housing system of Figure 12.
Figure 15 is a left side view of the oil filter housing system of Figure 12.

It will be recognized that the Figures are schematic representations for purposes of illustration. The Figures are provided for the purpose of illustrating one or more implementations with the explicit understanding that the Figures will not be used to limit the scope or the meaning of the claims.

### DETAILED DESCRIPTION OF VARIOUS EMBODIMENTS

Following below are more detailed descriptions of various concepts related to, and implementations of, apparatuses and systems for oil filtration in engine systems. The various concepts introduced above and discussed in greater detail below may be implemented in any of a number of ways, as the described concepts are not limited to any particular manner of implementation. Examples of specific implementations and applications are provided primarily for illustrative purposes. In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made. It will be readily understood that the aspects of the present disclosure, as generally described herein, and illustrated in the figures, can be arranged, substituted, combined, and designed in a wide variety of different configurations, all of which are explicitly contemplated and made part of this disclosure.

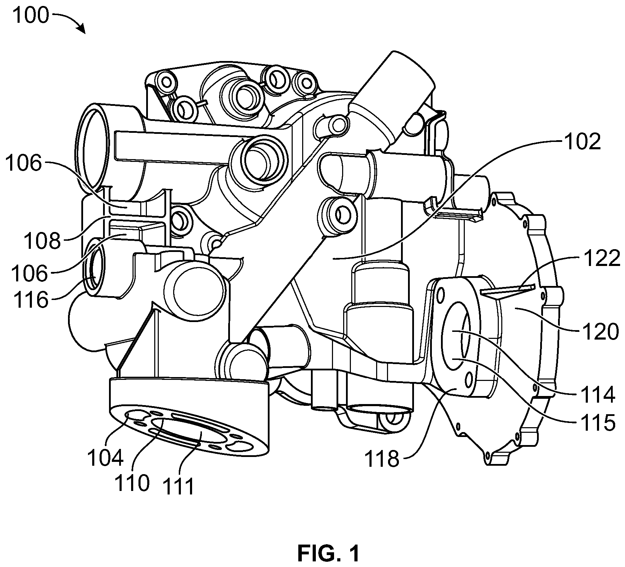

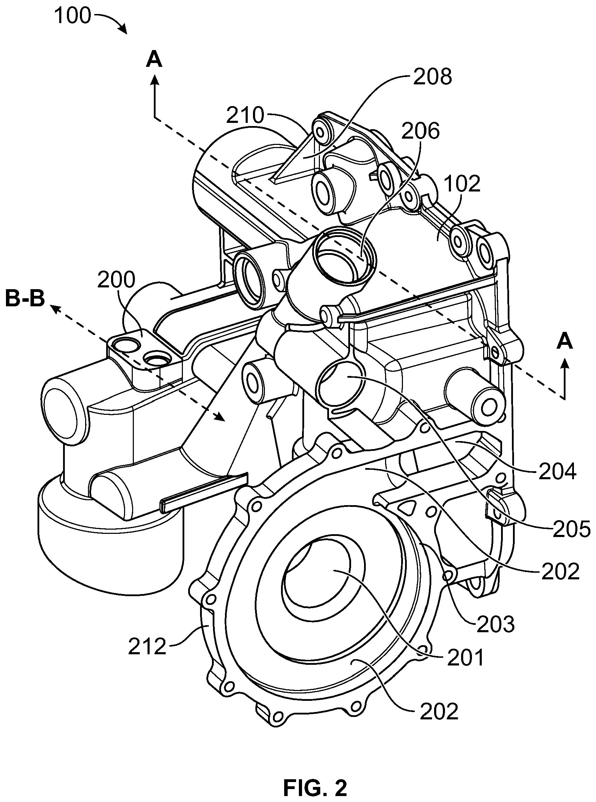

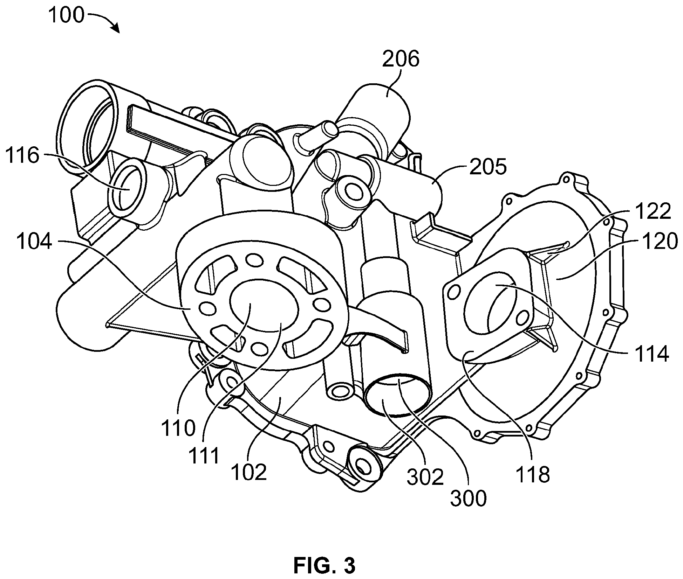

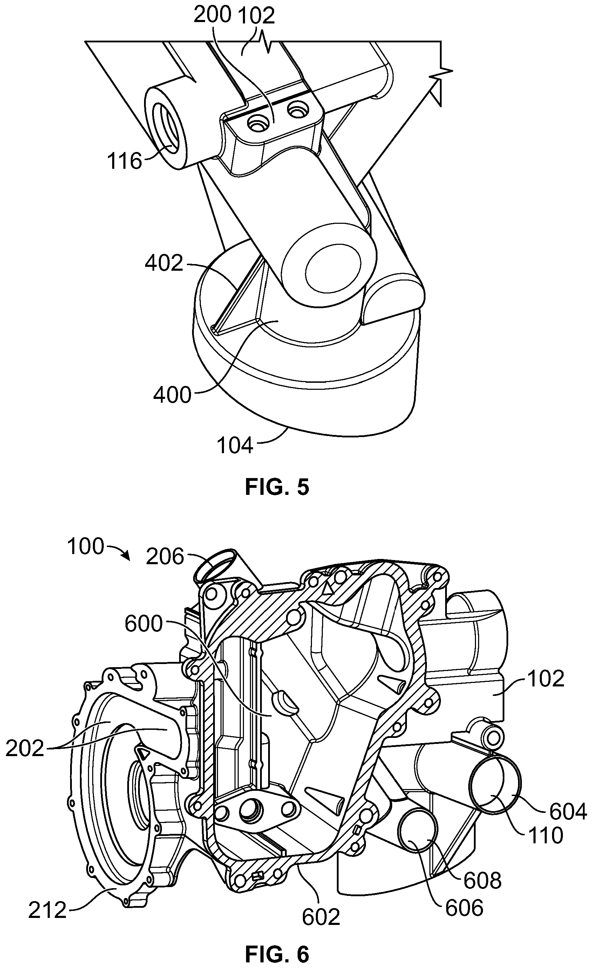

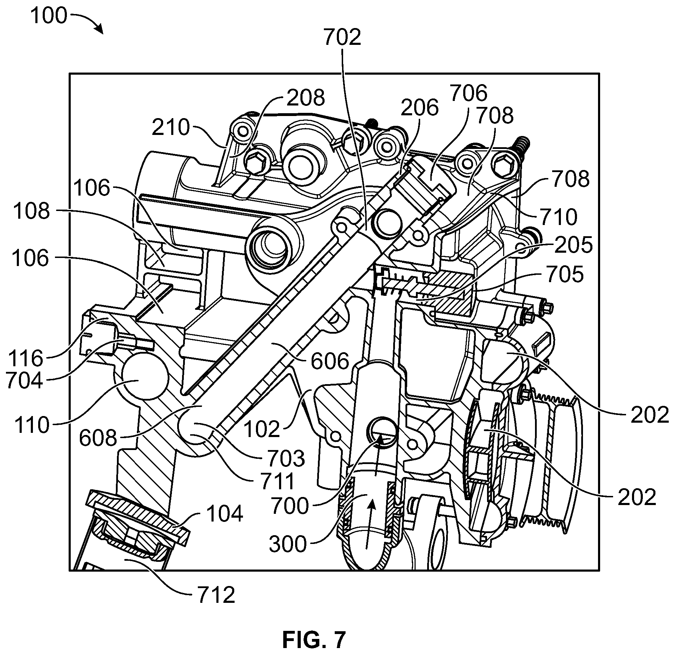

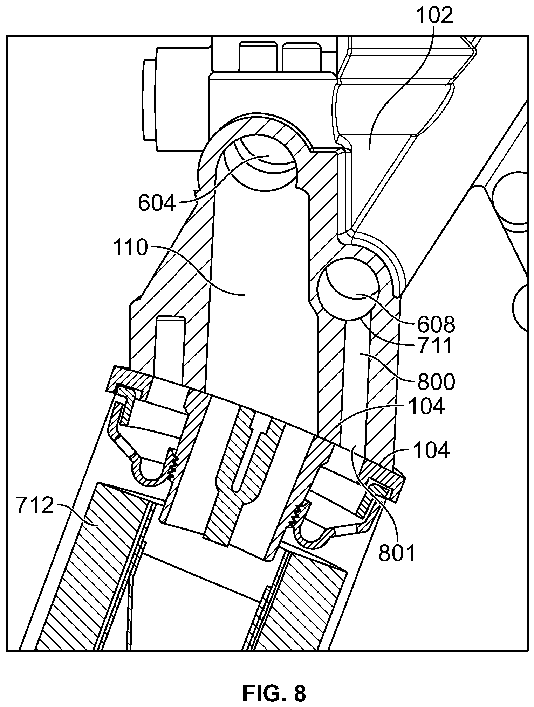

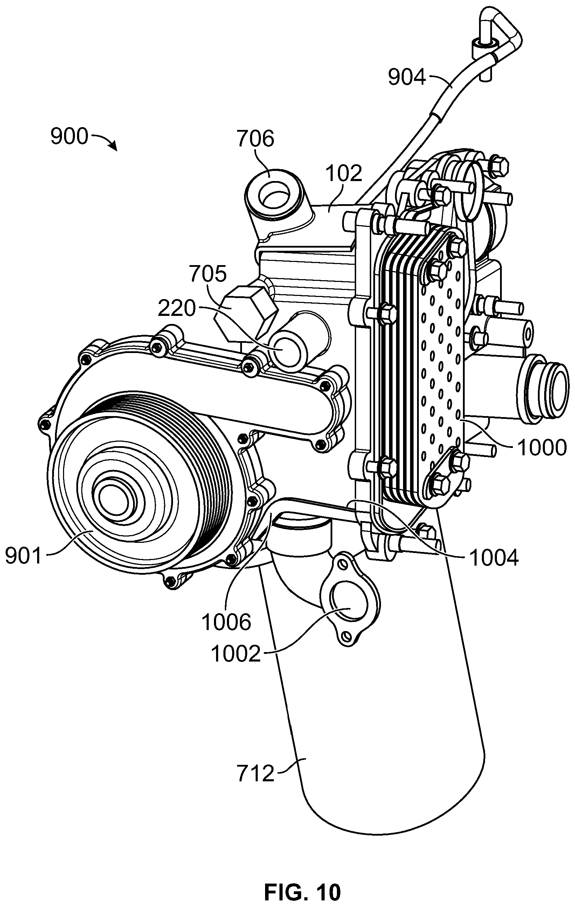

Figure 1 depicts an oil filter housing system 100 comprising a housing body 102. The housing body 102 defines an integral coolant supply passage 114 including an integral coolant supply passage inlet 115. The housing body 102 defines an integral coolant volute 202 (shown in Figure 2) including an integral coolant volute inlet 203 (shown in Figure 2). The housing body 102 defines an oil cooler cavity 600 (shown in Figure 6) configured to house an oil cooler 1000 (shown in Figure 10). The housing body 102 defines a first integral oil flow passage 300 (shown in Figure 3) including a first integral oil flow passage outlet 700 (shown in Figure 7). The housing body 102 defines a second integral oil flow passage 606 (shown in Figure 6) including a second integral oil flow passage inlet 702 (shown in Figure 7). The housing body 102 defines a third integral oil flow passage 110 including a third integral oil flow passage outlet 604 (shown in Figure 8). The housing body 102 defines an angled oil filter interface 104 coupled to the housing body 102 and configured to receive an oil filter 712 (shown in Figure 7), the oil filter 712 fluidly connected with the third integral oil flow passage 110.

The oil filter housing system 100 can be used in conjunction with an engine system. The engine system can comprise, for example, a diesel engine system, a gasoline engine system, a hybrid engine system, etc. The engine system can be configured to combust a fuel (e.g., diesel fuel, gasoline, etc.) to produce energy that can be utilized by various outputs.

The engine system comprises the oil filter housing system 100. The oil filter housing system 100 comprises the housing body 102. The housing body 102 defines an integral coolant supply passage including an integral coolant supply passage inlet 115. The housing body 102 further defines an integral coolant volute 202 including an integral coolant volute inlet 203. The housing body 102 defines an oil cooler cavity 600. The housing body 102 defines the first integral oil flow passage 300 including the first integral oil flow passage outlet 700. The housing body 102 defines the second integral oil flow passage 606 including the second integral oil flow passage inlet 702. The housing body 102 defines a third integral oil flow passage 110 including the third integral oil flow passage outlet 604. The housing body 102 defines the angled oil filter interface 104 coupled to the housing body. The coolant pump 901 is fluidly coupled to the housing body 102. The oil cooler 1000 is fluidly coupled to the housing body 102. A turbocharger is fluidly coupled to the housing body 102. An oil filter 712 is fluidly coupled to the angled oil filter interface 104.

In the embodiment of Figure 1, the housing body 102 defines a system of passages for fluid flow. The housing body 102 also includes interfaces configured to receive various attachments (for example, and as noted above, a coolant pump, an oil filter, an oil cooler, a turbocharger, etc.). The various attachments can facilitate fluid flow.

The housing body 102 of Figure 1 includes the angled oil filter interface 104. The angled oil filter interface 104 is integrated with the housing body 102 and is configured to receive the oil filter 712 (shown in Figure 7) when the oil filter housing system 100 is installed within the engine system. The angled oil filter interface 104 is configured at such an angle that the oil filter 712 protrudes from the angled oil filter interface 104 in a direction away from a vehicle chassis bracket (not shown) when the oil filter housing system 100 is installed in the engine system. The angle can be any angle, including a zero angle parallel to the ground. The angled oil filter interface 104 can be configured to position the attached oil filter 712 at a distance away from the vehicle chassis bracket to reduce interference between the oil filter 712 and the vehicle chassis bracket or to create a greater amount of space between the oil filter 712 and the vehicle chassis bracket. Reduced interference or a greater amount of space between the oil filter 712 and the vehicle chassis bracket can provide benefits such as better access to the oil filter 712 or the vehicle chassis bracket, easier interchangeability of various oil filter attachments, and allowing for different sizes, shapes, or configurations of the oil filter 712 or the vehicle chassis bracket, etc.

The housing body 102 of Figure 1 defines a first pocket 106. The first pocket 106 is configured to reduce the weight of the housing body 102. Other embodiments may not include the first pocket 106.

The housing body 102 also comprises a first support rib 108. The first support rib 108 is positioned within the first pocket 106. The first support rib 108 of Figure 1 extends from one side of the first pocket 106 to another side of the first pocket 106. The first support rib 108 is configured to provide support or strength to the housing body 102. The first support rib 108 can provide such support or strength in areas which may be weakened by the inclusion of the first pocket 106. Some embodiments may not include the first support rib 108.

The housing body 102 defines the third integral oil flow passage 110. The third integral oil flow passage 110 is in fluid receiving communication with the oil filter 712 (shown in Figure 7). When the oil filter housing system 100 is installed within the engine system, the third integral oil flow passage 110 is in fluid supplying communication with a turbocharger (not shown). The third integral oil flow passage 110 receives oil filtered by the oil filter 712 and supplies filtered oil to the turbocharger.

The third integral oil flow passage 110 defines a center axis, and the angled oil filter interface 104 is disposed along a plane such that the center axis is not orthogonal to the plane. In other embodiments, the center axis can be orthogonal to the plane, or the third integral oil flow passage 110 and the angled oil filter interface 104 can be configured in another manner relative to each other.

The housing body 102 also defines a third integral oil flow passage inlet 111. When the oil filter housing system 100 is installed within the engine system, the third integral oil flow passage inlet 111 is in fluid receiving communication with the oil filter 712 (shown in Figure 7).

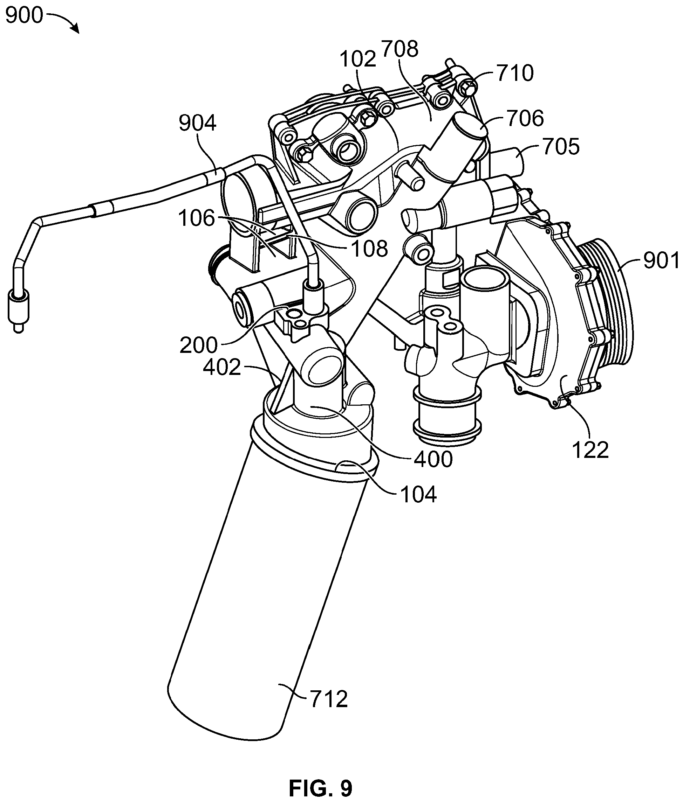

The housing body 102 of Figure 1 further defines the integral coolant supply passage 114. When the oil filter housing system 100 is installed within the engine system, the integral coolant supply passage 114 is in fluid supplying communication with the coolant pump 901 (shown in Figure 9). The integral coolant supply passage 114 supplies coolant to the coolant pump 901. The coolant can be water or other coolant.

The housing body 102 also defines an integral coolant supply passage inlet 115. When the oil filter housing system 100 is installed within the engine system, the integral coolant supply passage inlet 115 is in fluid receiving communication with a coolant inlet 902 (shown in Figure 9). The integral coolant supply passage inlet 115 receives the coolant from the coolant inlet 902. The coolant can be water or other coolant.

The housing body 102 further defines a first valve cavity 116. The first valve cavity 116 is configured to receive a valve (not shown) when the oil filter housing system 100 is installed within the engine system. The housing body 102 of Figure 1 defines one first valve cavity 116. In other embodiments, the housing body 102 may not define any first valve cavities 116. The first valve cavity 116 of Figure 1 is configured to receive a pressure regulating bypass valve 704 (shown in Figure 7). In other embodiments, the first valve cavity 116 can be configured to receive a pressure regulating valve or other type of valve.

The housing body 102 further defines an interface or attachment mechanism for receiving and securing the coolant inlet 902 (shown in Figure 9) when the oil filter housing system 100 is installed within the engine system. As shown in Figure 1, the housing body 102 includes a coolant inlet interface 118. The coolant inlet interface 118 is configured to receive the coolant inlet 902 and secure the coolant inlet 902 to the housing body 102.

The coolant inlet interface 118 is configured at such an angle that the coolant inlet 902 protrudes from the coolant inlet interface 118 in a direction away from the housing body 102 or the vehicle chassis bracket (not shown) when the oil filter housing system 100 is installed within the engine system. The angle can be any angle, including a zero angle parallel to the ground. The coolant inlet interface 118 can be configured to position the attached coolant inlet 902 at a distance away from the housing body 102 or the vehicle chassis bracket to reduce interference between the coolant inlet 902 and the housing body 102 or the vehicle chassis bracket or to create a greater amount of space between the coolant inlet 902 and the housing body 102 or the vehicle chassis bracket. Reduced interference or a greater amount of space between the coolant inlet 902 and the housing body 102 or the vehicle chassis bracket can provide benefits such as better access to the vehicle chassis bracket, easier interchangeability of various attachments, and allowing for different sizes, shapes, or configurations of the coolant inlet 902 or the vehicle chassis bracket, etc.

In other embodiments, the housing body 102 may not define the coolant inlet interface 118. The coolant inlet 902 can be attached or secured to the housing body 102 in another manner.

The housing body 102 of Figure 1 defines a second pocket 120. The second pocket 120 is configured to reduce the weight of the housing body 102. Other embodiments may not include the second pocket 120. As shown in Figure 1, the second pocket 120 is depicted in a differing shape from the first pocket 106. In other embodiments, the first pocket 106 and the second pocket 120 can each possess other shapes.

The housing body 102 also comprises a second support rib 122. The second support rib 122 is positioned within the second pocket 120. The second support rib 122 of Figure 1 extends from one side of the second pocket 120 to another side of the second pocket 120. The second support rib 122 is configured to provide support or strength to the housing body 102. The second support rib 122 can provide such support or strength in areas which may be weakened by the inclusion of the second pocket 120. Some embodiments may not include the second support rib 122.

As shown in Figure 2, the housing body 102 defines an oil supply plumbing connector 200. The oil supply plumbing connector 200 is configured to connect to oil supply plumbing 904 (shown in Figure 9) when the oil filter housing system 100 is installed within the engine system. In some embodiments, the oil supply plumbing connector 200 may not be defined by the housing body 102 and can be otherwise integrated with the housing body 102. Some embodiments may not have any oil supply plumbing connector 200.

As shown in Figure 2, the housing body 102 further defines the integral coolant supply passage outlet 201 of the integral coolant supply passage 114. When the oil filter housing system 100 is installed within the engine system, the integral coolant supply passage outlet 201 is in fluid supplying communication with the coolant pump 901 (shown in Figure 9).

As shown in Figure 2, the housing body 102 further defines the integral coolant volute 202. When the oil filter housing system 100 is installed within the engine system, the integral coolant volute 202 is in fluid receiving communication with the coolant pump 901 (shown in Figure 9). The integral coolant volute 202 receives the coolant from the coolant pump 901 and provides the coolant to the oil filter housing system 100. The coolant can reduce temperatures within the oil filter housing system 100. The coolant can be water or other coolant.

As shown in Figure 2, the integral coolant volute 202 is configured as a passage or channel to facilitate fluid flow and contains a curvature in its shape. The curvature can correspond to the same or similar curvature featured in the body or a passage of the coolant pump 901 (shown in Figure 9). In other embodiments, the integral coolant volute 202 can be configured or shaped in another manner.

As shown in Figure 2, the housing body 102 also defines the integral coolant volute inlet 203 of the integral coolant volute 202. When the oil filter housing system 100 is installed within the engine system, the integral coolant volute inlet 203 is in fluid receiving communication with the coolant pump 901 (shown in Figure 9).

As shown in Figure 2, the housing body 102 also further defines an integral coolant volute outlet 204 of the integral coolant volute 202. When the oil filter housing system 100 is installed within the engine system, the integral coolant volute outlet 204 is in fluid supplying communication with the oil cooler 1000 (shown in Figure 10).

As shown in Figure 2, the housing body 102 further defines a second valve cavity 205. The second valve cavity 205 is configured to receive a valve (not shown) when the oil filter housing system 100 is installed within the engine system. In other embodiments, the housing body 102 may not define any second valve cavities 205. The second valve cavity 205 of Figure 2 is configured to receive a first pressure regulating valve 705 (shown in Figure 7). In other embodiments, the second valve cavity 205 can be configured to receive a pressure regulating bypass valve, other type of valve, or oil thermostat.

As shown in Figure 2, the housing body 102 also defines a third valve cavity 206. The third valve cavity 206 is configured to receive a valve (not shown) when the oil filter housing system 100 is installed within the engine system. In other embodiments, the housing body 102 may not define any third valve cavities 206. The third valve cavity 206 of Figure 2 is configured to receive a second pressure regulating valve 706 (shown in Figure 7). In other embodiments, the third valve cavity 206 can be configured to receive a pressure regulating bypass valve or other type of valve or plug. As shown in Figure 2, the third valve cavity 206 is configured as an extension of the second integral oil flow passage 606 (shown in Figure 7). The third valve cavity 206 may not be configured as an extension of the second integral oil flow passage 606 and can be otherwise configured or positioned.

As shown in Figure 2, the second valve cavity 205 is positioned as a lower valve cavity in relation to the third valve cavity 206. The third valve cavity 206 is positioned as an upper valve cavity in relation to the second valve cavity 205. The second valve cavity 205 is configured as a lateral extension of the second integral oil flow passage 606 (shown in Figure 7). The second valve cavity 205 can also be configured as a lateral extension of the third valve cavity 206. In other embodiments, the second valve cavity 205 and the third valve cavity 206 may be otherwise positioned or configured.

The housing body 102 further defines an interface or attachment mechanism for receiving and securing the coolant pump 901 (shown in Figure 9) when the oil filter housing system 100 is installed within the engine system. As shown in Figure 2, the housing body 102 includes a coolant pump interface 212. The coolant pump interface 212 is configured to receive the coolant pump 901 and secure the coolant pump 901 to the housing body 102. In other embodiments, the housing body 102 may not define the coolant pump interface 212. The coolant pump 901 can be attached or secured to the housing body 102 in another manner.

As shown in Figure 2, the housing body 102 also defines a third pocket 208. The third pocket 208 is configured to reduce the weight of the housing body 102. Other embodiments may not include the third pocket 208.

The housing body 102 also comprises a third support rib 210. The third support rib 210 is positioned within the third pocket 208. The third support rib 210 of Figure 2 extends from one side of the third pocket 208 to another side of the third pocket 208. The third support rib 210 is configured to provide support or strength to the housing body 102. The third support rib 210 can provide such support or strength in areas which may be weakened by the inclusion of the third pocket 208. Some embodiments may not include the third pocket 208.

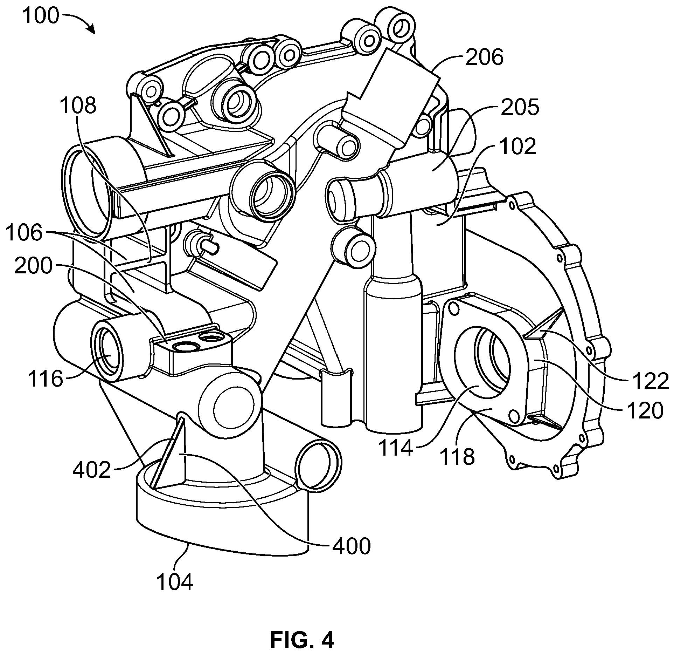

Figures 3 and 4 depict other perspective views of the oil filter housing system 100. As shown in Figure 3, the housing body 102 further defines the first integral oil flow passage 300. When the oil filter housing system 100 is installed within the engine system, the first integral oil flow passage 300 is in fluid supplying communication with the oil cooler 1000 (shown in Figure 10).

As shown in Figure 3, the housing body 102 also further defines the first integral oil flow passage inlet 302 of the first integral oil flow passage 300. When the oil filter housing system 100 is installed within the engine system, the first integral oil flow passage inlet 302 is in fluid receiving communication with an oil flow conduit 1002 (shown in Figure 10).

As shown in Figure 4, the housing body 102 defines a fourth pocket 400. The fourth pocket 400 is configured to reduce the weight of the housing body 102. Other embodiments may not include the fourth pocket 400.

The housing body 102 also comprises a fourth support rib 402. The fourth support rib 402 is positioned within the fourth pocket 400. The fourth support rib 402 of Figure 4 extends from one side of the fourth pocket 400 to another side of the fourth pocket 400. The fourth support rib 402 is configured to provide support or strength to the housing body 102. The fourth support rib 402 can provide such support or strength in areas which may be weakened by the inclusion of the fourth pocket 400. Some embodiments may not include the fourth support rib 402.

Figure 5 is a perspective view of a top portion of the oil filter housing system 100. Figure 6 is another view of the oil filter housing system 100. The housing body 102 defines the oil cooler cavity 600. The oil cooler cavity 600 is configured to receive and house the oil cooler 1000 (shown in Figure 10) when the oil filter housing system 100 is installed within the engine system. The oil cooler cavity 600 is shaped to correspond to the example oil cooler 1000 depicted in Figure 10. The oil cooler cavity 600 can possess different shapes in other embodiments.

The housing body 102 further defines an interface or attachment mechanism for receiving and securing the oil cooler 1000 (shown in Figure 10) when the oil filter housing system 100 is installed within the engine system. As shown in Figure 6, the housing body 102 includes an oil cooler interface 602. The oil cooler interface 602 is configured to receive the oil cooler 1000 and secure the oil cooler 1000 to the housing body 102. In other embodiments, the housing body 102 may not define the oil cooler interface 602. The oil cooler 1000 can be attached or secured to the housing body 102 in another manner.

As shown in Figure 6, the housing body 102 defines a third integral oil flow passage outlet 604 of the third integral oil flow passage 110. When the oil filter housing system 100 is installed within the engine system, the third integral oil flow passage outlet 604 is in fluid supplying communication with the cylinder block (not shown).

As shown in Figure 6, the housing body 102 further defines the second integral oil flow passage 606. When the oil filter housing system 100 is installed within the engine system, the second integral oil flow passage 606 is in fluid receiving communication with the oil cooler 1000 (shown in Figure 10). The second integral oil flow passage 606 receives the oil from the oil cooler 1000. The oil entering the second integral oil flow passage 606 can be cooled oil.

As shown in Figure 6, the housing body 102 also defines the second integral oil flow passage outlet 608 of the second integral oil flow passage 606.

Figure 7 depicts a cross section for the oil filter housing system 100. As shown in Figure 7, the housing body 102 defines the first integral oil flow passage outlet 700 of the first integral oil flow passage 300. When the oil filter housing system 100 is installed within the engine system, the first integral oil flow passage outlet 700 is in fluid supplying communication with the oil cooler 1000 (shown in Figure 10).

As shown in Figure 7, the housing body 102 defines the second integral oil flow passage 606. When the oil filter housing system 100 is installed within the engine system, the second integral oil flow passage 606 is in fluid receiving communication with the oil cooler 1000 (shown in Figure 10). The second integral oil flow passage 606 is in fluid supplying communication with the fourth integral oil flow passage 800. The second integral oil flow passage 606 receives the oil cooled by the oil cooler 1000 and supplies the cooled oil to the fourth integral oil flow passage 800. The second integral oil flow passage 606 spans generally from one side of the housing body 102 to another side of the housing body 102. In other embodiments, the second integral oil flow passage 606 can be configured or shaped in another manner.

As shown in Figure 7, the housing body 102 further defines the second integral oil flow passage outlet 703 of the second integral oil flow passage 606. The second integral oil flow passage outlet 703 is in fluid supplying communication with the fourth integral oil flow passage 800 (shown in Figure 8).

The oil filter housing system 100 of Figure 7 includes the pressure regulating bypass valve 704 when the oil filter housing system 100 is installed within the engine system. The pressure regulating bypass valve 704 is positioned within the first valve cavity 116. As shown in Figure 7, the housing body 102 defines one first valve cavity 116 having one pressure regulating bypass valve 704 therein. Other embodiments may not have any pressure regulating bypass valves 704.

The oil filter housing system 100 of Figure 7 includes the first pressure regulating valve 705 when the oil filter housing system 100 is installed within the engine system. The first pressure regulating valve 705 is positioned within the second valve cavity 205. Other embodiments may have multiple first pressure regulating valves 705 or may not have any first pressure regulating valves 705.

The oil filter housing system 100 of Figure 7 also includes the second pressure regulating valve 706 when the oil filter housing system 100 is installed within the engine system. The second pressure regulating valve 706 is positioned within the third valve cavity 206. Other embodiments may not have any second pressure regulating valves 706.

As shown in Figure 7, the housing body 102 further defines a fourth integral oil flow passage inlet 711 of the fourth integral oil flow passage 800 (shown in Figure 8). The fourth integral oil flow passage inlet 711 is in fluid receiving communication with the second integral oil flow passage 606.

As shown in Figures 7 and 8, the housing body 102 is coupled to the oil filter 712 when the oil filter housing system 100 is installed within the engine system. The oil filter 712 is attached to the housing body 102 at the angled oil filter interface 104. The oil filter 712 is in fluid receiving communication with the fourth integral oil flow passage 800 and in fluid supplying communication with the third integral oil flow passage 110. The oil filter 712 receives the oil from the fourth integral oil flow passage 800 and provides filtered oil to the third integral oil flow passage 110. Some embodiments may not have the oil filter 712.

As shown in Figure 7, the housing body 102 also defines a fifth pocket 708. The fifth pocket 708 is configured to reduce the weight of the housing body 102.Other embodiments may not include the fifth pocket 708.

The housing body 102 also comprises a fifth support rib 710. The fifth support rib 710 is positioned within the fifth pocket 708. The fifth support rib 710 of Figure 7 extends from one side of the fifth pocket 708 to another side of the fifth pocket 708. The fifth support rib 710 is configured to provide support or strength to the housing body 102. The fifth support rib 710 can provide such support or strength in areas which may be weakened by the inclusion of the fifth pocket 708. Some embodiments may not include the fifth support rib 710.

Figure 8 depicts a cross section for the oil filter housing system 100. As shown in Figure 8, the housing body 102 also defines a fourth integral oil flow passage 800. The fourth integral oil flow passage 800 is in fluid receiving communication with the second integral oil flow passage 606 (shown in Figure 6). When the oil filter housing system 100 is installed within the engine system, the fourth integral oil flow passage 800 is in fluid supplying communication with the oil filter 712. The fourth integral oil flow passage 800 receives the oil from the second integral oil flow passage 606 and conveys the oil to the oil filter 712. The oil entering the fourth integral oil flow passage 800 can be the cooled oil.

The housing body 102 also defines a fourth integral oil flow passage outlet 801 of the fourth integral oil flow passage 800. When the oil filter housing system 100 is installed within the engine system, the fourth integral oil flow passage outlet 801 is in fluid supplying communication with the oil filter 712. The fourth integral oil flow passage 800 supplies the cooled oil to the oil filter 712 so that the oil filter 712 can conduct filtration processes on the cooled oil.

As shown in Figure 8, the housing body 102 defines the third integral oil flow passage outlet 604 of the third integral oil flow passage 110. When the oil filter housing system 100 is installed within the engine system, the third integral oil flow passage outlet 604 is in fluid supplying communication with the turbocharger (not shown). The third integral oil flow passage outlet 604 supplies the oil to the turbocharger. The oil can be the filtered oil.

Figures 9 and 10 depict the oil filter housing system 100 shown with various attachments (e.g., oil filter, coolant pump, coolant inlet, oil supply, oil cooler, turbocharger, etc.) attached to the housing body 102. Such attachments can be attached to the housing body 102 when the oil filter housing system 100 is installed within the engine system.

The oil filtration system 900 comprises the oil filter housing system 100 and one or more attachments coupled to the oil filter housing system 100. The oil filter housing system 100 comprises the housing body 102. The housing body 102 defines the integral coolant supply passage including the integral coolant supply passage outlet 201. The housing body 102 further defines the integral coolant volute 202 including the integral coolant volute inlet 203 . The housing body 102 defines the oil cooler cavity 600 configured to house the oil cooler 1000. The housing body 102 defines the first integral oil flow passage 300 including the first integral oil flow passage outlet 700. The housing body defines the second integral oil flow passage 606 including the second integral oil flow passage inlet 702. The housing body defines the third integral oil flow passage 110 including the third integral oil flow passage outlet 604. The housing body defines the angled oil filter interface 104 coupled to the housing body and configured to receive the oil filter 712. The oil filter 712 is fluidly connected with the third integral oil flow passage 110.

As shown in Figures 9 and 10, the housing body 102 is configured such that attachments can be attached to the housing body 102 to form the oil filtration system 900. In other embodiments, the housing body 102 may not provide an attachment point for any attachments or the attachments may otherwise be integrated with the housing body 102. Some embodiments may only have one or at least one attachment, while other embodiments may not have any attachments.

When the oil filter housing system 100 is installed within the engine system, the coolant pump 901 of Figure 9 is attached to the housing body 102 at the coolant pump interface 212 (shown in Figure 2). The coolant pump 901 is in fluid receiving communication with the integral coolant supply passage 114 (shown in Figure 1) and in fluid supplying communication with the integral coolant volute 202 (shown in Figure 2). The coolant pump 901 receives the coolant from the integral coolant supply passage 114 and provides the coolant to the integral coolant volute 202. The coolant can be water or other coolant. Some embodiments may not have the coolant pump 901.

When the oil filter housing system 100 is installed within the engine system, the oil filter housing system 100 of Figure 9 is attached to the coolant inlet 902 at the coolant inlet interface 118 (shown in Figure 1). The coolant inlet 902 is in fluid supplying communication with the integral coolant supply passage 114 (shown in Figure 1). The coolant inlet 902 provides the coolant to the integral coolant supply passage 114. The coolant can be water or other coolant. Some embodiments may not have the coolant inlet 902.

When the oil filter housing system 100 is installed within the engine system, the oil filter housing system 100 of Figure 9 is also attached to the oil supply plumbing 904 at the oil supply plumbing connector 200 (shown in Figure 2). The oil supply plumbing 904 is in fluid supplying communication with the oil filter housing system 100. Some embodiments may not have the oil supply plumbing 904.

Figure 10 depicts a system comprising the oil filter housing system 100 when the oil filter housing system 100 is installed within the engine system. The coolant pump 901 is fluidly coupled to the housing body 102. The oil cooler 1000 is fluidly coupled to the housing body 102. The turbocharger (not shown) is fluidly coupled to the housing body 102. The oil filter 712 is fluidly coupled to the angled oil filter interface 104 (shown in Figure 1).

As shown in Figure 10, the oil filter housing system 100 is attached to the oil cooler 1000 at the oil cooler interface 602 (shown in Figure 6) when the oil filter housing system 100 is installed within the engine system. The oil cooler 1000 is in fluid receiving communication with the integral coolant volute 202 (shown in Figure 2) and in fluid receiving communication with the first integral oil flow passage 300. The oil cooler 1000 is in fluid supplying communication with the second integral oil flow passage 606 (shown in Figure 6). The oil cooler 1000 receives the coolant from the coolant pump 901 through the integral coolant volute 202. The coolant can be water or other coolant. The oil cooler 1000 also receives the oil from the oil flow conduit 1002 through the first integral oil flow passage 300. The oil cooler 1000 cools the oil and provides the cooled oil to the second integral oil flow passage 606. Some embodiments may not have the oil cooler 1000.

When the oil filter housing system 100 is installed within the engine system, the oil filter housing system 100 of Figure 10 is in fluid communication with the oil flow conduit 1002.

As shown in Figure 10, the housing body 102 also defines a sixth pocket 1004. The sixth pocket 1004 is configured to reduce the weight of the housing body 102. Some embodiments can include multiple sixth pockets 1004. Other embodiments may not include the sixth pocket 1004.

The housing body 102 also comprises a sixth support rib 1006. The sixth support rib 1006 is positioned within the sixth pocket 1004. The sixth support rib 1006 of Figure 10 extends from one side of the sixth pocket 1004 to another side of the sixth pocket 1004. The sixth support rib 1006 is configured to provide support or strength to the housing body 102. The sixth support rib 1006 can provide such support or strength in areas which may be weakened by the inclusion of the sixth pocket 1004. Some embodiments may not include the sixth support rib 1006.

As shown in Figure 10, when the oil filter housing system 100 is installed within the engine system, the oil flow conduit 1002 provides the oil to the first integral oil flow passage 300 (shown in Figure 3). The first integral oil flow passage 300 conveys the oil to the oil cooler 1000. The coolant inlet 902 provides the coolant to the coolant pump 901. The coolant pump 901 provides the coolant to the integral coolant volute 202. The integral coolant volute 202 supplies the coolant to the oil cooler 1000. The oil cooler 1000 receives the oil and the coolant and conducts cooling processes on the oil. The oil cooler 1000 provides the cooled oil to the second integral oil flow passage 606. The second integral oil flow passage 606 conveys the cooled oil to the fourth integral oil flow passage 800. The fourth integral oil flow passage 800 provides the cooled oil to the oil filter 712. The oil filter 712 conducts filtering processes on the cooled oil. The oil filter 712 provides the filtered oil to the third integral oil flow passage 110. The third integral oil flow passage 110 conveys the filtered oil to the turbocharger (not shown).

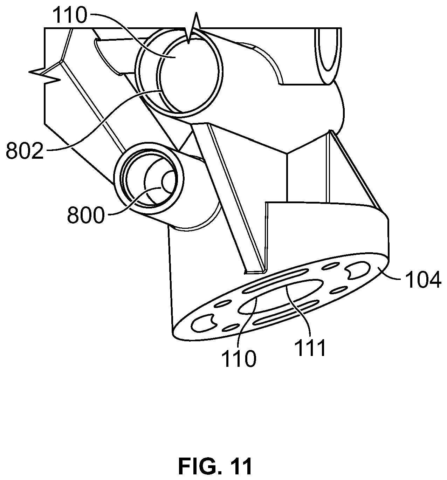

Figure 11 is a perspective view of a portion of the oil filter housing system 100. As shown in Figure 11, the housing body 102 defines a fourth integral oil flow passage rear outlet of the fourth integral oil flow passage 800.

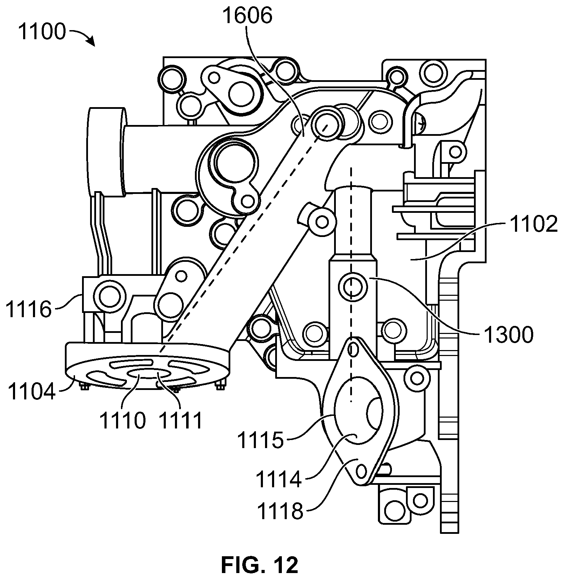

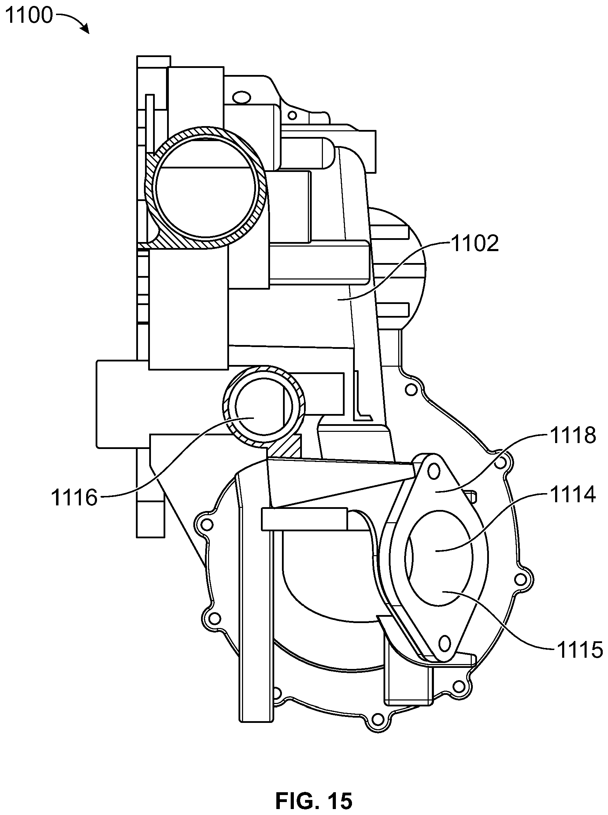

Figures 12-15 depict an oil filter housing system 1100 according to another embodiment. The oil filter housing system 1100 is similar to the oil filter housing system 100 of Figures 1-11, although there are a number of changes in shape and/or orientation for various features. It should also be understood that the features described with respect to Figures 1-11 can each be incorporated individually into the oil filter housing system 1100 of Figures 12-15.

The oil filter housing system 1100 comprises a housing body 1102. The housing body 1102 defines an integral coolant supply passage 1114 including an integral coolant supply passage outlet 1201. The housing body 1102 further defines an integral coolant volute 1202 including an integral coolant volute inlet 1203. The housing body 1102 defines an oil cooler cavity 1600. The housing body 1102 defines a first integral oil flow passage 1300. The housing body 1102 defines a second integral oil flow passage 1606. The housing body 1102 defines a third integral oil flow passage 1110 including a third integral oil flow passage outlet 1604. The housing body 1102 defines an angled oil filter interface 1104 coupled to the housing body.

The housing body 1102 includes the angled oil filter interface 1104. The angled oil filter interface 1104 is integrated with the housing body 1102 and is configured to receive an oil filter when the oil filter housing system 1100 is installed within the engine system. The angled oil filter interface 1104 is configured at such an angle that the oil filter protrudes from the angled oil filter interface 1104 in a direction away from a vehicle chassis bracket (not shown) when the oil filter housing system 1100 is installed in the engine system. The angle of the angled oil filter interface 1104 differs from the angle of the oil filter interface 104 in the embodiment of Figures 1-11.

The housing body 1102 defines the third integral oil flow passage 1110. The third integral oil flow passage 1110 is in fluid receiving communication with the oil filter. When the oil filter housing system 1100 is installed within the engine system, the third integral oil flow passage 1110 is in fluid supplying communication with a turbocharger. The third integral oil flow passage 1110 receives oil filtered by the oil filter and supplies filtered oil to the turbocharger.

The housing body 1102 also defines a third integral oil flow passage inlet 1111. When the oil filter housing system 1100 is installed within the engine system, the third integral oil flow passage inlet 1111 is in fluid receiving communication with the oil filter.

The housing body 1102 further defines the integral coolant supply passage 1114. When the oil filter housing system 1100 is installed within the engine system, the integral coolant supply passage 1114 is in fluid supplying communication with the coolant pump. The integral coolant supply passage 1114 supplies coolant to the coolant pump. The coolant can be water or other coolant.

The housing body 1102 also defines an integral coolant supply passage inlet 1115. When the oil filter housing system 1100 is installed within the engine system, the integral coolant supply passage inlet 1115 is in fluid receiving communication with a coolant inlet 1902. The integral coolant supply passage inlet 1115 receives the coolant from the coolant inlet. The coolant can be water or other coolant.

The housing body 1102 further defines a first valve cavity 1116. The first valve cavity 1116 is configured to receive a valve (not shown) when the oil filter housing system 1100 is installed within the engine system. The housing body 1102 of Figures 12-15 defines one first valve cavity 1116. In other embodiments, the housing body 1102 may not define any first valve cavities 1116. The first valve cavity 1116 is configured to receive a pressure regulating bypass valve. In other embodiments, the first valve cavity 1116 can be configured to receive a pressure regulating valve or other type of valve.

The housing body 1102 further defines an interface or attachment mechanism for receiving and securing the coolant inlet when the oil filter housing system 1100 is installed within the engine system. As shown in Figure 12, the housing body 1102 includes a coolant inlet interface 1118. The coolant inlet interface 1118 is configured to receive the coolant inlet and secure the coolant inlet to the housing body 1102. It is noted that the location of the coolant inlet interface 1118 differs from the location of the coolant inlet interface 118 of the oil filter housing system 100 of Figures 1-11.

The coolant inlet interface 1118 is configured at such an angle that the coolant inlet protrudes from the coolant inlet interface 1118 in a direction away from the housing body 1102 or the vehicle chassis bracket (not shown) when the oil filter housing system 1100 is installed within the engine system. The angle of the coolant inlet interface 1118 differs from the angle of the coolant inlet interface 118 of Figures 1-11.

In other embodiments, the housing body 1102 may not define the coolant inlet interface 1118. The coolant inlet can be attached or secured to the housing body 1102 in another manner.

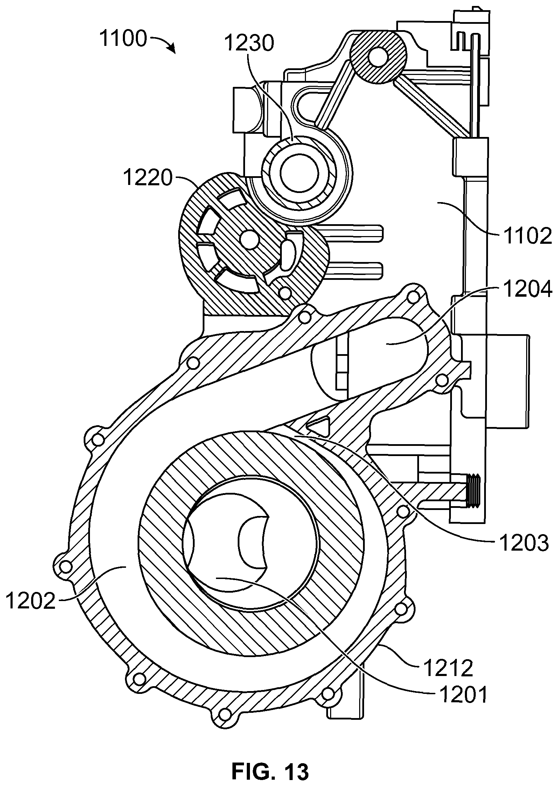

As shown in Figure 13, the housing body 1102 further defines the integral coolant supply passage outlet 1201 of the integral coolant supply passage 1114. When the oil filter housing system 1100 is installed within the engine system, the integral coolant supply passage outlet 1201 is in fluid supplying communication with the coolant pump.

As shown in Figure 13, the housing body 1102 further defines the integral coolant volute 1202. When the oil filter housing system 1100 is installed within the engine system, the integral coolant volute 1202 is in fluid receiving communication with the coolant pump. The integral coolant volute 1202 receives the coolant from the coolant pump and provides the coolant to the oil filter housing system 1100. The coolant can reduce temperatures within the oil filter housing system 1100. The coolant can be water or other coolant.

As shown in Figure 13, the integral coolant volute 1202 is configured as a passage or channel to facilitate fluid flow and contains a curvature in its shape. The curvature can correspond to the same or similar curvature featured in the body or a passage of the coolant pump. In other embodiments, the integral coolant volute 1202 can be configured or shaped in another manner.

As shown in Figure 13, the housing body 1102 also defines the integral coolant volute inlet 1203 of the integral coolant volute 1202. When the oil filter housing system 1100 is installed within the engine system, the integral coolant volute inlet 1203 is in fluid receiving communication with the coolant pump.

As shown in Figure 13, the housing body 1102 also further defines an integral coolant volute outlet 1204 of the integral coolant volute 1202. When the oil filter housing system 1100 is installed within the engine system, the integral coolant volute outlet 1204 is in fluid supplying communication with the oil cooler.

The housing body 1102 further defines an interface or attachment mechanism for receiving and securing the coolant pump when the oil filter housing system 1100 is installed within the engine system. As shown in Figure 13, the housing body 1102 includes a coolant pump interface 1212. The coolant pump interface 1212 is configured to receive the coolant pump and secure the coolant pump to the housing body 1102. In other embodiments, the housing body 1102 may not define the coolant pump interface 1212. The coolant pump can be attached or secured to the housing body 1102 in another manner. The orientation of the coolant pump interface 1212 is different from the orientation of the coolant pump interface 212 of the oil filter housing system 100 of Figures 1-11.

As shown in Figure 12, the housing body 1102 further defines the first integral oil flow passage 1300. When the oil filter housing system 1100 is installed within the engine system, the first integral oil flow passage 1300 is in fluid supplying communication with the oil cooler.

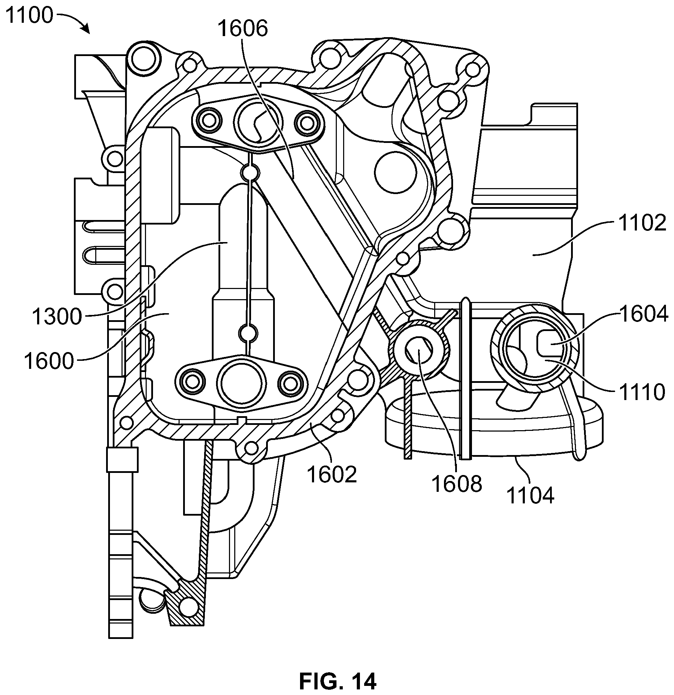

Figure 14 is another view of the oil filter housing system 1100. The housing body 1102 defines the oil cooler cavity 1600. The oil cooler cavity 1600 is configured to receive and house the oil cooler when the oil filter housing system 1100 is installed within the engine system. The oil cooler cavity 1600 is shaped to correspond to the oil cooler to be used in the system. The oil cooler cavity 1600 can possess different shapes in other embodiments.

The housing body 1102 further defines an interface or attachment mechanism for receiving and securing the oil cooler when the oil filter housing system 1100 is installed within the engine system. As shown in Figure 14, the housing body 1102 includes an oil cooler interface 1602. The oil cooler interface 1602 is configured to receive the oil cooler and secure the oil cooler to the housing body 1102. In other embodiments, the housing body 1102 may not define the oil cooler interface 1602. The oil cooler can be attached or secured to the housing body 1102 in another manner.

As shown in Figure 14, the housing body 1102 defines a third integral oil flow passage outlet 1604 of the third integral oil flow passage 1110. When the oil filter housing system 1100 is installed within the engine system, the third integral oil flow passage outlet 1604 is in fluid supplying communication with the turbocharger.

As shown in Figure 14, the housing body 1102 further defines the second integral oil flow passage 1606. When the oil filter housing system 1100 is installed within the engine system, the second integral oil flow passage 1606 is in fluid receiving communication with the oil cooler. The second integral oil flow passage 1606 receives the oil from the oil cooler. The oil entering the second integral oil flow passage 1606 can be cooled oil. It should be noted that the overall shape of the combination of the first integral oil flow passage 1300 and the second integral oil flow passage 1606 differs from the combination of the first integral oil flow passage 300 and the second integral oil flow passage 606 in the oil filter housing system of Figures 1-11.

As shown in Figure 14, the housing body 1102 also defines the second integral oil flow passage outlet 1608 of the second integral oil flow passage 1606. It is noted that the location of the second integral oil flow passage outlet 1608 differs from the location of the second integral oil flow passage outlet 608 of the oil filter housing system 100 of Figures 1-11.

As shown in Figure 13, the housing body 1102 may also include a mounting pulley interface 1220, providing a mounting location for a mounting pulley (not shown). The mounting pulley interface 1220 may be included in other locations (including other locations on the oil filter housing system 100 of Figures 1-11), or the mounting pulley interface 1220 may not be included.

As further shown in Figure 13, the housing body 1102 may also include an oil thermostat mounting interface 1230, providing a mounting location for an oil thermostat (not shown). The oil thermostat may be included in other locations (including other locations on the oil filter housing system 100 of Figures 1-11), or the oil thermostat mounting interface 1230 may not be included.

While this specification contains many specific implementation details, these should not be construed as limitations on the scope of what may be claimed but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a subcombination or variation of a subcombination.

As utilized herein, the term "generally" and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

The term "coupled" and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

It is important to note that the construction and arrangement of the various systems shown in the various example implementations is illustrative only and not restrictive in character. It should be understood that some features may not be necessary, and implementations lacking the various features may be contemplated as within the scope of the disclosure, the scope being defined by the claims that follow. When the language "a portion" is used, the item can include a portion and/or the entire item unless specifically stated to the contrary.

Also, the term "or" is used, in the context of a list of elements, in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

## Claims

1. An apparatus comprising an oil filter housing system (100) comprising:
a housing body (102) defining:
an integral coolant supply passage (114) including an integral coolant supply passage inlet (115);
an integral coolant volute (202) including an integral coolant volute inlet (203);
an oil cooler cavity (600) configured to house an oil cooler (1000);
a first integral oil flow passage (300) including a first integral oil flow passage outlet (700);
a second integral oil flow passage (606) including a second integral oil flow passage inlet (702);
a third integral oil flow passage (110) including a third integral oil flow passage outlet (604), the third integral oil flow passage (110) defining a center axis; and
an angled oil filter interface (104) coupled to the housing body (102) and configured to receive an oil filter (712), the angled oil interface (104) being disposed along a plane, wherein the center axis is not orthogonal to the plane.

2. The apparatus as claimed in claim 1, further comprising an oil flow conduit (1002) fluidly connected with the first integral oil flow passage (300).

3. The apparatus as claimed in claim 1 or claim 2, further comprising a coolant inlet (902), wherein the coolant inlet (902) is either fluidly connected with the integral coolant supply passage (114), or fluidly coupled to the housing body (102).

4. The apparatus claimed in any one of the preceding claims, wherein:
the angled oil filter interface (104) is integrated with the housing body (102) .

5. The apparatus as claimed in any one of the preceding claims, wherein the housing body (102) further defines a fourth integral oil flow passage (800) fluidly connected with the second integral oil flow passage (606).

6. The apparatus as claimed in any one of the preceding claims, wherein the housing body (102) further defines at least one valve cavity (116, 205, 206) configured to receive a valve.

7. The apparatus as claimed in claim 4, wherein the housing body (102) further defines:
a first valve cavity (116) and a second valve cavity (205) each configured to receive a pressure regulating valve; and
a third valve cavity (206) configured to receive a pressure regulating bypass valve.

8. The apparatus as claimed in any one of the preceding claims, further comprising at least one of:
a support rib (108, 122, 210, 402, 710, 1006) integrated with the housing body (102), and wherein the housing body (102) further defines a pocket (106, 120, 208, 400, 708, 1004), the support rib (108, 122, 210, 402, 710, 1006) positioned within the pocket;
mounting pulley interface (1220) coupled to the housing body (102) and configured to receive an idler pulley; and
an oil thermostat mounting interface (1230) coupled to the housing body (102) and configured to receive an oil thermostat.

9. The apparatus as claimed in claim 1, further comprising an oil filtration system (900) comprising:
the oil filter housing system (100); and
one or more attachments coupled to the oil filter housing system (100), wherein the one or more attachments comprises one or more of the oil filter (712), a coolant pump (901), a coolant inlet (902), an oil supply, the oil cooler (1000), and a turbocharger.

10. The apparatus as claimed in claim 1, further comprising an engine system, comprising:
a coolant pump (901) fluidly coupled to the housing body (102);
an oil cooler (1000) fluidly coupled to the housing body (102);
a turbocharger fluidly coupled to the housing body (102); and
an oil filter (712) fluidly coupled to the angled oil interface (104).

11. The apparatus as claimed in claim 10, wherein the oil filter housing system (100) comprises an oil flow conduit (1002) fluidly connected with the first integral oil flow passage, and wherein the oil flow conduit (1002) is fluidly coupled to the housing body (102).

12. The apparatus as claimed in claim 10 or claim 11, wherein the oil filter housing system (100) comprises a coolant inlet (902) fluidly connected with the integral coolant supply passage (114), and wherein the coolant inlet (902) is fluidly coupled to the housing body (102).

13. The apparatus as claimed in any one of claims 10 to 12, wherein the housing body (102) defines an oil supply plumbing connector (200), the oil supply plumbing connector (200) configured to connect to oil supply plumbing when the oil filter housing system (100) is installed within the engine system.

14. The apparatus as claimed in any one of claims 10 to 13, wherein the integral coolant volute (202) comprises a passage or channel and possesses a curvature corresponding to a curvature in a body or passage of the coolant pump (901).

## Patentansprüche

1. Einrichtung, die ein Ölfiltergehäusesystem (100) umfasst, das Folgendes umfasst:
einen Gehäusekörper (102), der Folgendes definiert:
einen integralen Kühlmittelzufuhrdurchgang (114), der einen integralen Kühlmittelzufuhrdurchgang-Einlass (115) beinhaltet;
eine integrale Kühlmittel-Spirale (202), die einen integralen Kühlmittel-Spirale-Einlass (203) beinhaltet;
einen Ölkühlerhohlraum (600), der dazu konfiguriert ist, einen Ölkühler (1000) unterzubringen;
einen ersten integralen Ölströmungsdurchgang (300), der einen ersten integralen Ölströmungsdurchgang-Auslass (700) beinhaltet;
einen zweiten integralen Ölströmungsdurchgang (606), der einen zweiten integralen Ölströmungsdurchgang-Einlass (702) beinhaltet;
einen dritten integralen Ölströmungsdurchgang (110), der einen dritten integralen Ölströmungsdurchgang-Auslass (604) beinhaltet, wobei der dritte integrale Ölströmungsdurchgang (110) eine Mittelachse definiert; und
eine abgewinkelte Ölfilterschnittstelle (104), die mit dem Gehäusekörper (102) gekoppelt und dazu konfiguriert ist, einen Ölfilter (712) aufzunehmen, wobei die abgewinkelte Ölfilterschnittstelle (104) entlang einer Ebene angeordnet ist,
wobei die Mittelachse nicht orthogonal zu der Ebene ist.

2. Einrichtung nach Anspruch 1, die weiter eine Ölströmungsleitung (1002) umfasst, die fluidisch mit dem ersten integralen Ölströmungsdurchgang (300) verbunden ist.

3. Einrichtung nach Anspruch 1 oder Anspruch 2, die weiter einen Kühlmitteleinlass (902) umfasst, wobei der Kühlmitteleinlass (902) entweder fluidisch mit dem integralen Kühlmittelzufuhrdurchgang (114) verbunden oder fluidisch mit dem Gehäusekörper (102) gekoppelt ist.

4. Einrichtung nach einem der vorstehenden Ansprüche, wobei:
die abgewinkelte Ölfilterschnittstelle (104) in das Gehäuse (102) integriert ist.

5. Einrichtung nach einem der vorstehenden Ansprüche, wobei der Gehäusekörper (102) weiter einen vierten integralen Ölströmungsdurchgang (800) definiert, der fluidisch mit dem zweiten integralen Ölströmungsdurchgang (606) verbunden ist.

6. Einrichtung nach einem der vorstehenden Ansprüche, wobei der Gehäusekörper (102) weiter mindestens einen Ventilhohlraum (116, 205, 206) definiert, der zum Aufnehmen eines Ventils konfiguriert ist.

7. Einrichtung nach Anspruch 4, wobei der Gehäusekörper (102) weiter Folgendes definiert:
einen ersten Ventilhohlraum (116) und einen zweiten Ventilhohlraum (205), die jeweils zum Aufnehmen eines Druckregelventils konfiguriert sind; und
einen dritten Ventilhohlraum (206), der zum Aufnehmen eines Druckregel-Bypassventils konfiguriert ist.

8. Einrichtung nach einem der vorstehenden Ansprüche, die weiter mindestens eines der Folgenden umfasst:
eine Stützrippe (108, 122, 210, 402, 710, 1006), die mit dem Gehäusekörper (102) integriert ist, und wobei der Gehäusekörper (102) weiter eine Tasche (106, 120, 208, 400, 708, 1004) definiert, innerhalb der die Stützrippe (108, 122, 210, 402, 710, 1006) positioniert ist;
eine Befestigungsriemenscheibenschnittstelle (1220), die mit dem Gehäusekörper (102) gekoppelt und zum Aufnehmen einer Umlenkriemenscheibe konfiguriert ist; und
eine Ölthermostat-Montageschnittstelle (1230), die mit dem Gehäusekörper (102) gekoppelt ist und zum Aufnehmen eines Ölthermostats konfiguriert ist.

9. Einrichtung nach Anspruch 1, die weiter ein Ölfiltrationssystem (900) umfasst, das Folgendes umfasst:
das Ölfiltergehäusesystem (100); und
ein oder mehrere Anbauteile, die mit dem Ölfiltergehäusesystem (100) gekoppelt sind, wobei das eine oder die mehreren Anbauteile eines oder mehrere des Ölfilters (712), einer Kühlmittelpumpe (901), eines Kühlmitteleinlasses (902), einer Ölzufuhr, des Ölkühlers (1000) und eines Turboladers umfassen.

10. Einrichtung nach Anspruch 1, die weiter ein Motorsystem umfasst, das Folgendes umfasst:
eine Kühlmittelpumpe (901), die fluidisch mit dem Gehäusekörper (102) gekoppelt ist;
einen Ölkühler (1000), der fluidisch mit dem Gehäusekörper (102) gekoppelt ist;
einen Turbolader, der fluidisch mit dem Gehäusekörper (102) gekoppelt ist; und
einen Ölfilter (712), der fluidisch mit der abgewinkelten Ölschnittstelle (104) gekoppelt ist.

11. Einrichtung nach Anspruch 10, wobei das Ölfiltergehäusesystem (100) eine Ölströmungsleitung (1002) umfasst, die fluidisch mit dem ersten integralen Ölströmungsdurchgang verbunden ist, und wobei die Ölströmungsleitung (1002) fluidisch mit dem Gehäusekörper (102) gekoppelt ist.

12. Einrichtung nach Anspruch 10 oder Anspruch 11, wobei das Ölfiltergehäusesystem (100) einen Kühlmitteleinlass (902) umfasst, der fluidisch mit dem integralen Kühlmittelzufuhrdurchgang (114) verbunden ist, und wobei der Kühlmitteleinlass (902) fluidisch mit dem Gehäusekörper (102) gekoppelt ist.

13. Einrichtung nach einem der Ansprüche 10 bis 12, wobei der Gehäusekörper (102) einen Ölzufuhrrohranschluss (200) definiert, wobei der Ölzufuhrrohranschluss (200) dazu konfiguriert ist, mit einem Ölzufuhrrohr verbunden zu werden, wenn das Ölfiltergehäusesystem (100) in dem Motorsystem installiert ist.

14. Einrichtung nach einem der Ansprüche 10 bis 13, wobei die integrale Kühlmittel-Spirale (202) einen Durchgang oder Kanal umfasst und eine Krümmung besitzt, die einer Krümmung in einem Körper oder Durchgang der Kühlmittelpumpe (901) entspricht.

## Revendications

1. Appareil comprenant un système de boîtier de filtre à huile (100) comprenant :
un corps de boîtier (102) définissant :
un passage d'alimentation en liquide de refroidissement intégré (114) incluant un orifice d'entrée de passage d'alimentation en liquide de refroidissement intégré (115) ;
une volute de liquide de refroidissement intégrée (202) incluant un orifice d'entrée de volute de liquide de refroidissement intégré (203) ;
une cavité de refroidisseur d'huile (600) configurée pour loger un refroidisseur d'huile (1000) ;
un premier passage d'écoulement d'huile intégré (300) incluant un premier orifice de sortie de passage d'écoulement d'huile intégré (700) ;
un deuxième passage d'écoulement d'huile intégré (606) incluant un second orifice d'entrée de passage d'écoulement d'huile intégré (702) ;
un troisième passage d'écoulement d'huile intégré (110) incluant un troisième orifice de sortie de passage d'écoulement d'huile intégré (604), le troisième passage d'écoulement d'huile intégré (110) définissant un axe central ; et
une interface de filtre à huile inclinée (104) couplée au corps de boîtier (102) et configurée pour recevoir un filtre à huile (712), l'interface d'huile inclinée (104) étant disposée le long d'un plan,
dans lequel l'axe central n'est pas orthogonal au plan.

2. Appareil selon la revendication 1, comprenant en outre un conduit d'écoulement d'huile (1002) relié fluidiquement au premier passage d'écoulement d'huile intégré (300).

3. Appareil selon la revendication 1 ou la revendication 2, comprenant en outre un orifice d'entrée de liquide de refroidissement (902), dans lequel l'orifice d'entrée de liquide de refroidissement (902) est soit relié fluidiquement au passage d'alimentation en liquide de refroidissement intégré (114), soit couplé fluidiquement au corps de boîtier (102).

4. Appareil selon l'une quelconque des revendications précédentes, dans lequel :
l'interface de filtre à huile inclinée (104) est intégrée au corps de boîtier (102).

5. Appareil selon l'une quelconque des revendications précédentes, dans lequel le corps de boîtier (102) définit en outre un quatrième passage d'écoulement d'huile intégré (800) relié fluidiquement au deuxième passage d'écoulement d'huile intégré (606).

6. Appareil selon l'une quelconque des revendications précédentes, dans lequel le corps de boîtier (102) définit en outre au moins une cavité de vanne (116, 205, 206) configurée pour recevoir une vanne.

7. Appareil selon la revendication 4, dans lequel le corps de boîtier (102) définit en outre :
une première cavité de vanne (116) et une deuxième cavité de vanne (205) configurées chacune pour recevoir une vanne de régulation de pression ; et
une troisième cavité de vanne (206) configurée pour recevoir une vanne de dérivation de régulation de pression.

8. Appareil selon l'une quelconque des revendications précédentes, comprenant en outre au moins une :
d'une nervure de support (108, 122, 210, 402, 710, 1006) intégrée au corps de boîtier (102), et dans lequel le corps de boîtier (102) définit en outre une poche (106, 120, 208, 400, 708, 1004), la nervure de support (108, 122, 210, 402, 710, 1006) étant positionnée dans la poche ;
d'une interface de poulie de montage (1220) couplée au corps de boîtier (102) et configurée pour recevoir une poulie libre ; et
d'une interface de montage de thermostat d'huile (1230) couplée au corps de boîtier (102) et configurée pour recevoir un thermostat d'huile.

9. Appareil selon la revendication 1, comprenant en outre un système de filtration d'huile (900) comprenant :
le système de boîtier de filtre à huile (100) ; et
un ou plusieurs accessoires couplés au système de boîtier de filtre à huile (100), dans lequel les un ou plusieurs accessoires comprennent un ou plusieurs du filtre à huile (712), d'une pompe à liquide de refroidissement (901), d'un orifice d'entrée de liquide de refroidissement (902), d'une alimentation en huile, du refroidisseur d'huile (1000) et d'un turbocompresseur.

10. Appareil selon la revendication 1, comprenant en outre un système de moteur, comprenant :
une pompe à liquide de refroidissement (901) couplée fluidiquement au corps de boîtier (102) ;
un refroidisseur d'huile (1000) couplé fluidiquement au corps de boîtier (102) ;
un turbocompresseur couplé fluidiquement au corps de boîtier (102) ; et
un filtre à huile (712) couplé fluidiquement à l'interface d'huile inclinée (104).

11. Appareil selon la revendication 10, dans lequel le système de boîtier de filtre à huile (100) comprend un conduit d'écoulement d'huile (1002) relié fluidiquement au premier passage d'écoulement d'huile intégré, et dans lequel le conduit d'écoulement d'huile (1002) est couplé fluidiquement au corps de boîtier (102).

12. Appareil selon la revendication 10 ou la revendication 11, dans lequel le système de boîtier de filtre à huile (100) comprend un orifice d'entrée de liquide de refroidissement (902) relié fluidiquement au passage d'alimentation en liquide de refroidissement intégré (114), et dans lequel l'orifice d'entrée de liquide de refroidissement (902) est couplé fluidiquement au corps de boîtier (102).

13. Appareil selon l'une quelconque des revendications 10 à 12, dans lequel le corps de boîtier (102) définit un connecteur de tuyauterie d'alimentation en huile (200), le connecteur de tuyauterie d'alimentation en huile (200) étant configuré pour être raccordé à la tuyauterie d'alimentation en huile lorsque le système de boîtier de filtre à huile (100) est installé dans le système de moteur.

14. Appareil selon l'une quelconque des revendications 10 à 13, dans lequel la volute de liquide de refroidissement intégrée (202) comprend un passage ou un canal et possède une courbure correspondant à une courbure dans un corps ou un passage de la pompe de refroidissement (901).
